# EUROPÄISCHE PATENTSCHRIFT

(11) **EP 2 135 042 B1**
(45) Veröffentlichungstag und Bekanntmachung des Hinweises auf die Patenterteilung: **14.10.2015**
(21) Anmeldenummer: 08716016.4
(22) Anmeldetag: 25.02.2008
(51) Int. Cl.: G01D 5/14

(54) **ELEKTROMOTOR**
ELECTRIC MOTOR
MOTEUR ÉLECTRIQUE

(30) Priorität: 14.03.2007 DE 102007013091
(43) Veröffentlichungstag der Anmeldung: 23.12.2009
(73) Patentinhaber: SEW-EURODRIVE GmbH & Co. KG, 76646 Bruchsal (DE)
(72) Erfinder: SIMON, Olaf, 76646 Bruchsal (DE)
(74) Vertreter: Tüngler, Eberhard
(86) Internationale Anmeldenummer: PCT/EP2008/001471
(87) Internationale Veröffentlichungsnummer: WO 2008/110257

(56) Entgegenhaltungen:
- EP-A- 1 403 622
- WO-A-2004/008075
- FR-A- 2 861 459

## Beschreibung

Die Erfindung betrifft einen Elektromotor.

Es ist bekannt, bei Elektromotoren einen Anbaugeber vorzusehen. Dabei wird ein Winkelsensor, beispielsweise mittels einer Spreizwellenverbindung mit der Rotorwelle des Motors verbunden.

Aus der EP 1 403 622 A1 ist ein Elektromotor bekannt, wobei ein Winkelsensor am Loslager vorgesehen ist.

Aus der WO 2004/008075 A2 ist ein Verfahren zur Absolutwinkelmessung bekannt.

Aus der FR 2 861 459 A1 ist ein System mit Umdrehungszähler bekannt.

Der Erfindung liegt daher die Aufgabe zugrunde, einen kompakten kostengünstigen Motor zu schaffen.

Erfindungsgemäß wird die Aufgabe bei dem Elektromotor bei den in Anspruch 1 angegebenen Merkmalen gelöst.

Wichtige Merkmale der Erfindung bei dem System mit Winkelsensor zur Erfassung der Winkellage einer Welle sind, dass der Winkelsensor einen Geberstator und einen mit der Welle verbundenen Geberrotor umfasst,
wobei die Welle in einem Gehäuseteil mittels zumindest eines in axialer Richtung relativ zum Gehäuseteil verschiebbar angeordneten Lagers gelagert ist,
wobei der Geberstator mit dem Lager direkt oder indirekt verbunden ist.

Von Vorteil ist dabei, dass der Abstand zwischen Geberrotor und Geberstator auch bei Verschiebungen der Welle gegen das Gehäuseteil konstant ist, also unerheblich gering ist. Denn beide sind an der Welle beziehungsweise an dem zur Welle unverschiebbarem Lager angeordnet. Außerdem ist kein spezielles Gehäuse für den Winkelsensor nötig sondern das Motorgehäuse ist ebenfalls gehäusebildend für den Sensor. Darüber hinaus ist durch die enge Anbindung eine integrierte und somit kompakte Lösung gefunden.

**Erfindungsgemäß** ist der Geberstator am Lageraußenring des Lagers und/oder an einem mit dem Lageraußenring fest verbundenen Adapterring verbunden. Von Vorteil ist dabei, dass der Außenring nicht bearbeitet werden muss und somit nicht beschädigt werden kann. Außerdem sind Standard-Lager verwendbar.

**Erfindungsgemäß** ist der Lageraußenring des Lagers in axialer Richtung relativ zum Gehäuseteil verschiebbar. Von Vorteil ist dabei, dass das Lager als Loslager ausgestaltet ist und somit Verschiebungen des um das Lager herum sich befindenden Wellenbereiches aufnehmbar sind.

**Erfindungsgemäß** ist der Lageraußenring des Lagers von einem Adapterring gehalten, der in axialer Richtung relativ zum Gehäuseteil verschiebbar ist. Von Vorteil ist dabei, dass der Adapterring bearbeitbar ist zur Vorsehung der formschlüssigen Verbindung. Nach der Bearbeitung ist er verbindbar mit dem Lager und somit das Lager nicht belastet.

**Erfindungsgemäß** ist der Lageraußenring oder der Adapterring in Umfangsrichtung formschlüssig gehalten im Gehäuseteil, wobei die formschlüssige Verbindung Verschiebungen in axialer Richtung zulässt, insbesondere wobei diese Verbindung als axial ausgerichtete Passfederverbindung ausgeführt ist. Von Vorteil ist dabei, dass die Winkelbestimmung sicher und korrekt ausführbar ist, wobei eine spielfreie Verbindung den Winkel-Bestimmungsfehler vermiedet oder zumindest weiter verringert.

**Erfindungsgemäß** ist der Lagerinnenring in axialer Richtung formschlüssig mit der Rotorwelle gehalten ist und/oder in Umfangsrichtung durch kraftschlüssig, stoffschlüssig und/oder formschlüssig gehalten ist. Von Vorteil ist dabei, dass keine axiale Verschiebung des Lagerinnenrings zur Welle erfolgt und somit der Abstand zwischen Geberrotor und Geberstator konstant ist.

Bei einer vorteilhaften Ausgestaltung ist das System derart gestaltet, dass bei thermisch oder axialkraft-bedingten relativen Verschiebungen des Lagers gegen das Gehäuseteil der axiale Abstand zwischen Geberstator und Geberrotor im Wesentlichen konstant ist.

Bei einer vorteilhaften Ausgestaltung erfassen der Geberrotor Dauermagnete oder Codierungen umfasst und der Geberstator Mittel zum erfassen der Lage oder Bewegung der Dauermagnete oder Codierungen. Von Vorteil ist dabei, dass verschiedene Wirkprinzipien uneingeschränkt anwendbar sind. Dabei sind alle Sorten von Sensoren verwendbar, die einen im Wesentlichen konstanten Abstand erfordern.

**Erfindungsgemäß** umfasst der Winkelsensor einen drehrichtungsabhängigen Umdrehungszähler umfasst. Von Vorteil ist dabei, dass Absolutwertgeber vorsehbar sind.

Wichtige Merkmale der Erfindung bei dem Elektromotor sind, dass eine Rotorwelle, die zumindest mittels eines Festlagers und eines Loslagers gelagert ist, umfasst ist, wobei ein Winkelsensor am Loslager vorgesehen ist. Von Vorteil ist dabei, dass auf der Festlagerseite Komponenten, wie Bremse und dergleichen, unbehindert vorsehbar sind.

Wichtige Merkmale der Erfindung bei dem Elektromotor mit Winkelsensor zur Erfassung der Winkellage einer Welle sind alternativ, dass der Winkelsensor einen Geberstator und einen mit der Welle verbundenen Geberrotor umfasst,
wobei die Welle in einem Gehäuseteil mittels zumindest eines in axialer Richtung relativ zum Gehäuseteil verschiebbar angeordneten Lagers gelagert ist,
wobei der Geberstator mit dem Lager direkt oder indirekt verbunden ist.

Insbesondere ist die Welle die Rotorwelle des Motors und das Gehäuseteil ein Motorflanschteil oder das Statorgehäuse.

Von Vorteil ist dabei, dass ein Motor mit hochgenauem Winkelgeber vorsehbar ist, der äußerst kompakt aufbaubar ist, weil der Sensor innerhalb des Motorgehäuses sitzt und geschützt ist. Außerdem ist kein Ausrichten einer Geberwelle zur Motorwelle notwendig. Entsprechende Kupplungsmittel sind ebenfalls verzichtbar. Wenn ein optisches Prinzip beim Geber verwendet wird, ergeben sich auch keine Störfelder vom Stator des Elektromotors aus. Trotz der verschiebbaren Anordnung des Lagers ist ein abstandsempfindlicher Winkelsensor verwendbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
Der erfindungsgemäße Motor umfasst eine Rotorwelle, die in zumindest zwei Lagern gelagert ist im Gehäuse des Motors. Ein erstes Lager ist als Festlager ausgeführt. Ein weiteres Lager ist als Loslager aufgeführt. Das Loslager ist dabei in der Lage, beispielhaft thermisch bedingte Längenveränderungen durch Verschiebung zu kompensieren, wobei das Lager relativ zum Gehäuseteil in axialer Richtung verschiebbar ist.

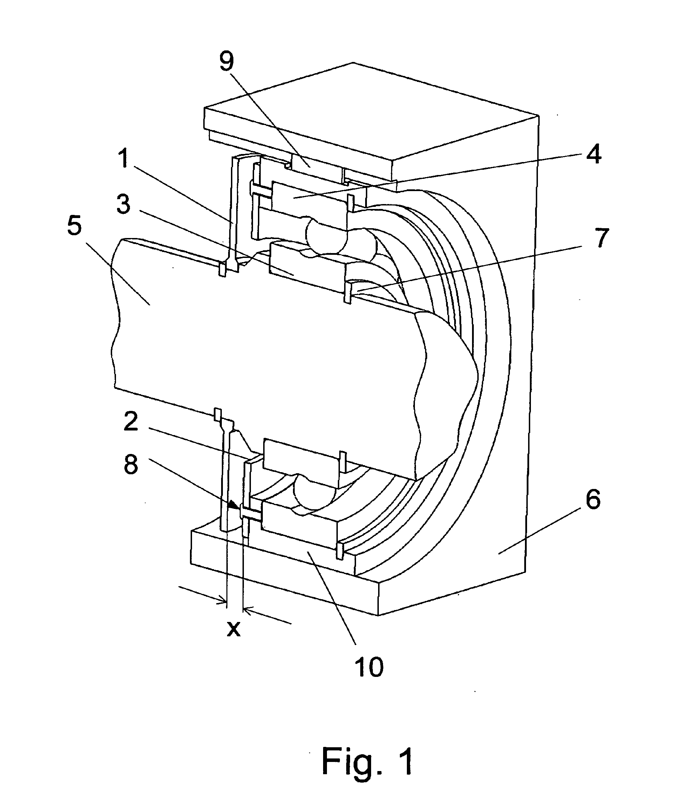

In der Figur 1 ist das Loslager näher gezeigt. Dabei ist in der Nähe des Lagers ein Geber, also Winkellagensensor, vorgesehen, dessen Geberrotor 1 mit der Rotorwelle 5 verbunden ist und entsprechend mit dieser rotiert. Der Geberstator 2 ist am Lageraußenring 4 lösbar verbunden. Hierzu ist eine Schraube 8 vorgesehen.

Das Lager ist ein als Kugellager ausgeführtes Wälzlager.

Der Lagerinnenring 3 ist formschlüssig in axialer Richtung mit der Rotorwelle 5 verbunden, so dass er bei einer thermisch bedingten Längenveränderung oder durch Axialkraft bedingten Axialverschiebung der Rotorwelle 5 ebenfalls mit verschoben wird in axialer Richtung. Hierzu ist der Lageraußenring in axialer Richtung verschiebbar im Gehäuseteil 6 angeordnet. In Umfangsrichtung ist am Lageraußenring eine Drehmomentstütze vorgesehen, die in Figur 1 beispielhaft als Passfederverbindung mit Passfeder 9 ausgeführt ist. Für die Passfeder ist einerseits eine in axialer Richtung verlaufende Nut im Gehäuseteil 6 und eine ebenfalls axial verlaufende Nut im Lageraußenring 4 vorgesehen.

Der Lagerinnenring 3 ist mittels des Sicherungsrings 7 und eines in der Figur ersichtlichen Absatzes an der Rotorwelle in axialer Richtung gehalten. Statt des Absatzes ist auch ein Sicherungsring vorteilhaft verwendbar bei anderen erfindungsgemäßen Ausführungsbeispielen. Ebenso sind statt der Sicherungsringe auch andere Mittel zum formschlüssigen oder auch kraftschlüssigen Halten in axialer Richtung verwendbar.

Vorteiligerweise ist mit der Erfindung gesichert, dass der Abstand zwischen Geberrotor und Geberstator 2 im Wesentlichen konstant bleibt, da die Verschiebung nicht zwischen Rotorwelle und Lager sondern zwischen Lager und Gehäuseteil vorgesehen ist. Somit werden Geberrotor 1 und Geberstator 2 gleichermaßen verschoben. Die thermisch bedingten Abstandsänderung zwischen Geberrotor 1 und Geberstator 2 sind genügend klein und somit im Toleranzbereich des Gebers, wobei dies als konstanter Abstand im Sinne der Erfindung bezeichenbar ist.

Die thermische bedingte Verschiebung des Lagers gegen das Gehäuseteil hängt wesentlich auch von der Länge der Rotorwelle ab und ist mindestens zwei Größenordnungen größer als die thermisch bedingte Abstandsänderung zwischen Geberrotor 1 und Geberstator 2. Die Erfindung ermöglicht nun auch, dass an der Festlagerseite des Motors spielfrei zu montierende Komponenten, wie Motorbremse oder dergleichen, vorsehbar sind.

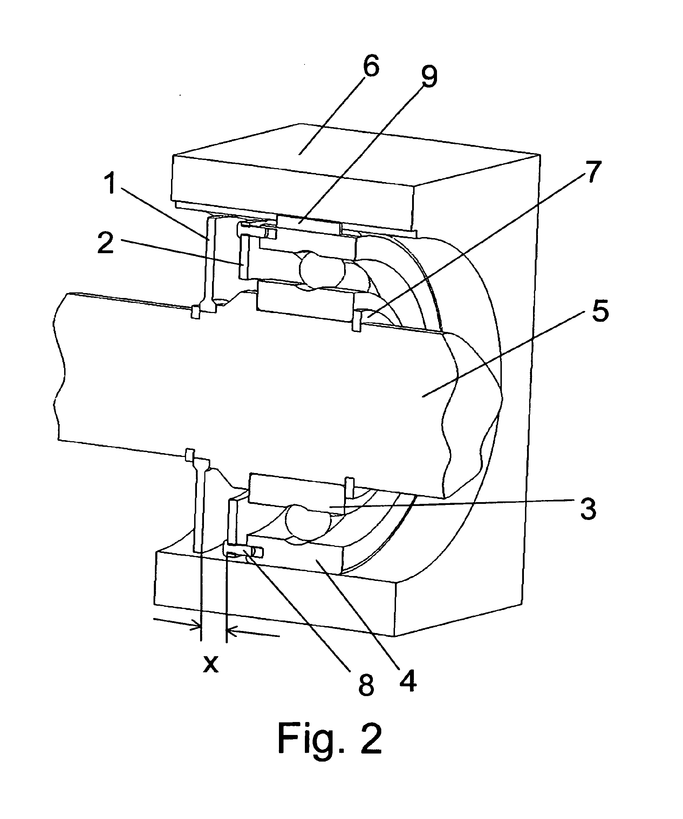

In Figur 2 ist ein weiteres erfindungsgemäßes Ausführungsbeispiel vorgesehen, wobei hier der Lageraußenring in einem Adapterring 10 fest verbunden ist. Hierzu weist der Adapterring 10 einen Absatz und einen Sicherungsring auf, wodurch der Lageraußenring 4 in axialer Richtung gehalten ist. In Umfangsrichtung ist eine kraftschlüssige, wie Presspassung, oder auch stoffschlüssige Verbindung, wie Klebeverbindung, vorsehbar.

Im Unterschied zur Figur 1 ist somit nicht der Lageraußenring sondern der Adapterring gegen das Gehäuseteil 6 verschiebbar angeordnet. Die Passfederverbindung als Drehmomentstütze ist dabei zwischen Adapterring 10 und Gehäuseteil 6 vorgesehen. Somit muss der Lageraußenring 4 nicht bearbeitet werden sondern ist ohne Befestigungsbohrungen für den Geberstator 2 oder Passfeder-Nuten ausführbar.

Vorteiligerweise ist bei weiteren erfindungsgemäßen Ausführungsbeispielen der Geberstator 2 am Adapterring 10 mit der Schraube 8 verbindbar und nicht am Lageraußenring 4, wie in der Figur 2 gezeigt.

Als Geber sind verschiedene Sensoren verwendbar, die beispielsweise nach einem magnetischen, optischen, elektrischen oder elektromagnetischen Prinzip arbeiten. Beispielsweise sind auf dem Geberrotor 2 Magnete vorsehbar, deren Anwesenheit und/oder Bewegung von Sensorspulen oder Wieganddrähten, also Impulsdrähten, detektierbar sind. Dabei ist der Geber derart ausführbar, dass er ohne zuzuführende Energie die Anzahl der Umdrehungen erfassen und speichern kann, wobei FRAM-Technik und Impulsdrähte vorteiligerweise verwendbar sind. Es sind aber auch Geber einsetzbar, die nach mechanischen Prinzipien funktionieren oder nach optischen.

Anstatt der genannten Kugellager ist die Erfindung auch bei anderen Lagern, wie beispielsweise Zylinderrollenlager und anderen Wälzkörper umfassenden Lagern, ausführbar.

Bei weiteren erfindungsgemäßen Ausführungsbeispielen sind statt der Schraube 8 auch andere lösbare oder sogar nicht lösbare Verbindungen vorteilhaft ausführbar.

Bei weiteren erfindungsgemäßen Ausführungsbeispielen ist als Gehäuseteil 6 ein Motorflansch oder Statorgehäuse des Motors wählbar.

### Bezugszeichenliste

- 1: Geberrotor
- 2: Geberstator
- 3: Lagerinnenring
- 4: Lageraußenring
- 5: Rotorwelle
- 6: Gehäuseteil
- 7: Sicherungsring
- 8: Schraube
- 9: Passfeder
- 10: Adapterring

## Patentansprüche

1. Elektromotor mit Winkelsensor zur Erfassung der Winkellage einer Welle,
wobei der Winkelsensor einen Geberstator (2) und einen mit der Welle verbundenen Geberrotor (1) umfasst,
wobei die Welle in einem Gehäuseteil (6) mittels zumindest eines in axialer Richtung relativ zum Gehäuseteil (6) verschiebbar angeordneten Lagers gelagert ist,
wobei der Geberstator (2) mit dem Lager direkt oder indirekt verbunden ist,
die Welle die Rotorwelle (5) des Motors ist und das Gehäuseteil (6) ein Motorflanschteil oder das Statorgehäuse,
**dadurch gekennzeichnet, dass**
der Geberstator (2) an einem mit dem Lageraußenring (4) fest verbundenen Adapterring (10) verbunden ist mit einer Schraube (8),
wobei der Lageraußenring (4) des Lagers in axialer Richtung relativ zum Gehäuseteil (6) verschiebbar ist,
wobei der Lageraußenring (4) des Lagers von dem Adapterring (10) gehalten ist, der in axialer Richtung relativ zum Gehäuseteil (6) verschiebbar ist,
wobei der Adapterring (10) in Umfangsrichtung formschlüssig gehalten ist im Gehäuseteil (6), wobei die formschlüssige Verbindung Verschiebungen in axialer Richtung zulässt, wobei diese Verbindung als axial ausgerichtete Passfederverbindung ausgeführt ist,
wobei der Lagerinnenring (3) von der Rotorwelle (5) in axialer Richtung formschlüssig gehalten ist und/oder in Umfangsrichtung kraftschlüssig, stoffschlüssig und/oder formschlüssig gehalten ist.
wobei der Winkelsensor einen drehrichtungsabhängigen Umdrehungszähler umfasst.

2. System nach Anspruch 1,
**dadurch gekennzeichnet, dass**
das System derart gestaltet ist, dass bei thermisch oder axialkraft-bedingten relativen Verschiebungen des Lagers gegen das Gehäuseteil (6) der axiale Abstand zwischen Geberstator (2) und Geberrotor (1) im Wesentlichen konstant ist.

3. System nach Anspruch 1 oder 2,
**dadurch gekennzeichnet, dass**
der Geberrotor (1) Dauermagnete oder Codierungen umfasst und der Geberstator (2) Mittel zum erfassen der Lage oder Bewegung der Dauermagnete oder Codierungen.

## Claims

1. Electric motor having an angle sensor for detecting the angular position of a shaft,
wherein the angle sensor comprises a transducer stator (2) and a transducer rotor (1) connected to the shaft,
wherein the shaft is supported in a housing part (6) by means of at least one bearing arranged displaceably in the axial direction relative to the housing part (6),
wherein the transducer stator (2) is directly or indirectly connected to the bearing,
the shaft is the rotor shaft (5) of the motor and the housing part (6) is a motor flange part or the stator housing,
**characterised in that**
the transducer stator (2) is connected by a screw (8) to an adapter ring (10) fixedly connected to the bearing outer ring (4),
wherein the bearing outer ring (4) of the bearing is displaceable in the axial direction relative to the housing part (6),
wherein the bearing outer ring (4) of the bearing is held by the adapter ring (10) which is displaceable in the axial direction relative to the housing part (6),
wherein the adapter ring (10) is held in the housing part (6) in a form-locking manner in the circumferential direction, the form-locking connection allowing displacements in the axial direction, this connection being formed as an axially oriented feather key connection,
wherein the bearing inner ring (3) is held by the rotor shaft (5) in a form-locking manner in the axial direction and/or is held in a force-locking, material-locking and/or form-locking manner in the circumferential direction,
wherein the angle sensor comprises a revolution counter dependent on the direction of rotation.

2. System according to Claim 1,
**characterised in that**
the system is designed in such a manner that, in the event of thermally- or axial-force-induced relative displacements of the bearing relative to the housing part (6), the axial distance between transducer stator (2) and transducer rotor (1) is substantially constant.

3. System according to Claim 1 or 2,
**characterised in that**
the transducer rotor (1) comprises permanent magnets or codings and the transducer stator (2) comprises means for detecting the position or movement of the permanent magnets or codings.

## Revendications

1. Moteur électrique équipé d'un capteur angulaire conçu pour détecter la position angulaire d'un arbre,
ledit capteur angulaire comprenant un stator (2) de codeur et un rotor (1) de codeur qui est relié à l'arbre,
ledit arbre étant monté dans une partie (6) formant carter, à l'aide d'au moins un palier agencé à coulissement dans le sens axial par rapport à ladite partie (6) formant carter,
le stator (2) du codeur étant relié directement ou indirectement audit palier,
ledit arbre étant l'arbre rotorique (5) du moteur, et ladite partie (6) formant carter matérialisant une bride dudit moteur, ou le carter statorique,
**caractérisé par le fait que**
le stator (2) du codeur est relié, au moyen d'une vis (8), à une bague d'adaptation (10) reliée rigidement à la bague extérieure (4) du palier,
ladite bague extérieure (4) du palier étant apte à coulisser dans le sens axial par rapport à la partie (6) formant carter,
ladite bague extérieure (4) du palier étant retenue par ladite bague d'adaptation (10) qui est apte à coulisser, dans le sens axial, par rapport à ladite partie (6) formant carter,
ladite bague d'adaptation (10) étant retenue, dans ladite partie (6) formant carter, par complémentarité de formes dans la direction périphérique, sachant que la liaison par complémentarité de formes autorise des coulissements dans le sens axial, cette liaison étant réalisée sous la forme d'une jonction par clavette d'ajustement, orientée dans le sens axial,
la bague intérieure (3) du palier étant retenue par l'arbre rotorique (5) dans le sens axial, par complémentarité de formes, et/ou étant retenue, dans la direction périphérique, par engagement positif, par solidarisation matérielle et/ou par complémentarité de formes,
le capteur angulaire incluant un compte-tours tributaire du sens de rotation.

2. Système selon la revendication 1,
**caractérisé par le fait que**
ledit système est configuré de façon telle que la distance axiale, entre le stator (2) du codeur et le rotor (1) du codeur, soit pour l'essentiel constante lors de déplacements relatifs du palier vis-à-vis de la partie (6) formant carter, induits thermiquement ou par des forces axiales.

3. Système selon la revendication 1 ou 2,
**caractérisé par le fait que**
le rotor (1) du codeur inclut des aimants permanents ou des codes, et le stator (2) du codeur comporte des moyens affectés à la détection de la position ou du mouvement desdits aimants permanents ou desdits codes.
